# EUROPÄISCHE PATENTSCHRIFT

(11) **EP 3 490 776 B1**
(45) Veröffentlichungstag und Bekanntmachung des Hinweises auf die Patenterteilung: **21.10.2020**
(21) Anmeldenummer: 16809305.2
(22) Anmeldetag: 28.11.2016
(51) Int. Cl.: B29C 45/16, B29C 45/26

(54) **VERFAHREN ZUM HERSTELLEN EINES FLÜSSIGKEITSBEHÄLTERS, FLÜSSIGKEITSBEHÄLTER FÜR EIN KRAFTFAHRZEUG UND SPRITZGUSSWERKZEUG**
METHOD FOR PRODUCING A LIQUID CONTAINER, LIQUID CONTAINER FOR A MOTOR VEHICLE AND INJECTION MOLDING TOOL
PROCÉDÉ DE FABRICATION D'UN RÉSERVOIR À LIQUIDE, RÉSERVOIR À LIQUIDE POUR VÉHICULE À MOTEUR, ET MOULE À INJECTION

(30) Priorität: 29.07.2016 DE 102016214059
(43) Veröffentlichungstag der Anmeldung: 05.06.2019
(73) Patentinhaber: Kautex Textron GmbH & Co. KG, 53229 Bonn (DE)
(72) Erfinder: KARSCH, Ulrich, 53859 Niederkassel (DE)
(74) Vertreter: Richly & Ritschel Patentanwälte PartG mbB
(86) Internationale Anmeldenummer: PCT/EP2016/079030
(87) Internationale Veröffentlichungsnummer: WO 2018/019396

(56) Entgegenhaltungen:
- WO-A1-2011/020582
- JP-A- H1 052 834
- US-A1- 2015 102 026

## Beschreibung

Die Erfindung betrifft ein Verfahren zum Herstellen eines Flüssigkeitsbehälters für ein Kraftfahrzeug, einen Flüssigkeitsbehälter für ein Kraftfahrzeug und ein Spritzgusswerkzeug.

In modernen Kraftfahrzeugen werden eine Mehrzahl verschiedener Betriebsflüssigkeiten in Flüssigkeitsbehältern bzw. Tanks bevorratet. Dabei kann es sich beispielsweise um Treibstoff, Motoröl, Harnstofflösung zur selektiven katalytischen Reduktion oder auch Reinigungsflüssigkeit für die Verglasung der Scheinwerfer oder der Fahrgastzelle handeln.

Um die Umweltbelastung durch Kraftfahrzeuge gering zu halten, besteht die Forderung, umweltbelastende Substanzen, wie z.B. Kraftstoff zum Antrieb des Fahrzeugs, zuverlässig in einem Flüssigkeitsbehälter aufzunehmen und zu kapseln. Insbesondere für leicht bauende Kunststofftanks zur Bevorratung von Kraftstoff gilt es, die diffusionsbedingte Emission über die Kunststoffwandung des Tanks gering zu halten. Dazu werden die Kunststoffwandungen solcher Tanks mehrschichtig aufgebaut und weisen eine Sperrschicht auf, die als Diffusionsbarriere für den bevorrateten Kraftstoff dient.

Diese mehrschichtigen Kunststoffwandungen mit Sperrschicht werden üblicherweise im Koextrusionsblasformen zunächst als matten- oder schlauchförmige Halbzeuge koextrudiert und anschließend durch Blasformen in die vorgesehene Form gebracht. Durch die schlauch- oder mattenförmige Koextrusion wird gewährleistet, dass sich die Sperrschicht vollflächig über die gesamte Tankwandung erstreckt. Abgesehen von einer Einfüllöffnung des Tanks ist somit das gesamte Hohlraumvolumen zur Bevorratung von Treibstoff von der Sperrschicht eingefasst bzw. umschlossen.

Dadurch, dass beim Koextrusionsblasformen die Extrusion des Halbzeugs und der eigentliche Formvorgang, nämlich die Innendruckbeaufschlagung des Halbzeugs in einem Blasformwerkzeug, in zwei separaten Arbeitsschritten erfolgt, ist das Blasformen vergleichsweise zeit- und kostenintensiv. Demgegenüber bietet das Spritzgussverfahren grundsätzlich den Vorteil, dass der Zwischenschritt der Extrusion des Halbzeugs eingespart werden kann, in dem der plastifizierte Kunststoff unmittelbar in eine Kavität eines Spritzgusswerkzeugs eingespritzt wird.

Beim Spritzgießen mehrschichtiger Bauteile mit zwei oder mehr Kunststoffkomponenten besteht jedoch der Nachteil, dass es zu Inhomogenitäten in der Schichtdicke und der Schichtausbreitung kommen kann. Insbesondere in von einem Anguss beabstandeten Randbereichen kann es durch Unregelmäßigkeiten im Fließfrontverlauf und den Fließweglängen einer oder mehrerer Kunststoffkomponenten zu einer unvollständigen Schichtausbildung kommen, so dass eine vollflächige Schichtausbildung, beispielsweise einer Sperrschicht, nicht gewährleistet werden kann. Daher werden mehrschichtige Wandungen von Kraftstofftanks üblicherweise nicht im Spritzgussverfahren gefertigt. JPH1052834A beschreibt ein Verfahren zum Herstellen eines Kunststoff-Hohlkörpers durch Bereitstellen einer Spritzgussmaschine, die ein Spritzgusswerkzeug mit wenigstens einer Kavität aufweist, die zum Abbilden der Geometrie des Kunststoff-Hohlkörpers vorgesehen ist und der zwischen Formwandungen wenigstens einer ersten und einer zweiten Formhälfte des Spritzgusswerkzeugs gebildet ist. Das Spritzgusswerkzeug weist Unterkavitäten auf, die mit der Hauptkavität fluid verbunden sind. Die Unterkavitäten werden dabei ausschließlich mit einem Primärwerkstoff gefüllt und dienen lediglich dazu, eine Schichtausbildung eines Sekundärwerkstoffs innerhalb der Kavität zu steuern, so dass der Sekundärwerkstoff vollständig von dem Primärwerkstoff umhüllt ist.

Vor diesem Hintergrund liegt der vorliegenden Erfindung die technische Problemstellung zugrunde, ein Verfahren zum Herstellen eines Flüssigkeitsbehälters für ein Kraftfahrzeug anzugeben, welches die voranstehend beschriebenen Nachteile nicht oder zumindest in geringerem Maße aufweist, und insbesondere eine vollflächige Ausbildung einer Sperrschicht ermöglicht. Weiter sollen ein Flüssigkeitsbehälter für ein Kraftfahrzeug und ein Spritzgusswerkzeug angegeben werden.

Die voranstehend beschriebene, technische Problemstellung wird gelöst durch ein Verfahren nach Anspruch 1, einen Flüssigkeitsbehälter nach Anspruch 14 und ein Spritzgusswerkzeug nach Anspruch 16 gelöst. Weitere Ausgestaltungen der Erfindung ergeben sich aus den abhängigen Ansprüchen und der nachstehenden Beschreibung.

Die Erfindung betrifft ein Verfahren zum Herstellen eines Flüssigkeitsbehälters für ein Kraftfahrzeug, der aus wenigstens zwei Schalen zusammengesetzt ist, wobei die folgenden Verfahrensschritte durchlaufen werden:
- Bereitstellen einer Spritzgussmaschine,
   - mit einem Spritzgusswerkzeug,
   - wobei das Spritzgusswerkzeug wenigstens einen Formhohlraum hat, der zum Abbilden der Geometrie einer ersten Schale des Flüssigkeitsbehälters vorgesehen ist und der zwischen Formwandungen wenigstes einer ersten und einer zweiten Formhälfte des Spritzgusswerkzeugs gebildet ist,
   - wobei das Spritzgusswerkzeug wenigstens einen Nebenhohlraum hat,
   - wobei der Nebenhohlraum mit dem Formhohlraum in Fluidverbindung steht,
   - wobei der Nebenhohlraum in einem von einem Angussbereich beabstandeten Randbereich des Formhohlraums zumindest abschnittsweise an den Formhohlraum angrenzt, und
   - wobei der Nebenhohlraum zur Aufnahme von überschüssigem Spritzgusswerkstoff vorgesehen ist;
- Herstellen der ersten Schale durch Plastifizieren und Einspritzen einer ersten Kunststoffkomponente und einer zweiten Kunststoffkomponente in den Formhohlraum,
   - so dass die erste und die zweite Kunststoffkomponente entlang einer Grenzfläche miteinander verbunden werden und
   - dass sich die erste Kunststoffkomponente an eine Formwandung der ersten Formhälfte anlegt und die zweite Kunststoffkomponente und die Grenzfläche von der Formwandung der ersten Formhälfte beabstandet sind,
   - wobei wenigstens ein Teil des Nebenhohlraums mit überschüssigem Spritzgusswerkstoff der ersten und zweiten Kunststoffkomponente gefüllt wird;
- Herstellen einer zweiten Schale des Flüssigkeitsbehälters;
- Verbinden der ersten und zweiten Schale;
- Entfernen des überschüssigen Materials der ersten und zweiten Kunststoffkomponente, wobei das Entfernen des überschüssigen Materials vor oder nach dem Verbinden der Schalen erfolgt.

Dadurch, dass sich sowohl die erste als auch die zweite Kunststoffkomponente bei der Herstellung der ersten Schale bis in den Nebenhohlraum erstrecken, kann auch in dem Randbereich des Formhohlraums in zuverlässiger Weise ein zwei- oder mehrschichtiger Aufbau des Flüssigkeitsbehälters erreicht werden.

Der in dem Nebenhohlraum aufgenommene Spritzgusswerkstoff der ersten und zweiten Kunststoffkomponente (überschüssiger Spritzgusswerkstoff) ist nicht Teil der vorgesehenen Endgeometrie des Flüssigkeitsbehälters und wird daher entfernt. Der Nebenhohlraum dient während des Spritzgussprozesses somit als Über- oder Auslaufzone für die Fließfronten der Kunststoffkomponenten, so dass etwaige Inhomogenitäten in der Schichtausbildung in einen von der eigentlichen Bauteilgeometrie beabstandeten Bereich, den Nebenhohlraum, verlagert werden können.

Das Entfernen des überschüssigen Spritzgusswerkstoffs kann beispielsweise durch Abtrennen, Schneiden (z.B. per Laser oder Wasserstrahl), Stanzen, Sägen oder Fräsen erfolgen. Das entfernte Material kann einem Recycling zugeführt werden.

Wenn vorliegend von "Grenzflächen" gesprochen wird, so handelt es sich dabei um Bereiche, in denen die Kunststoffkomponenten aneinanderhaften. Die Grenzflächen können gebildet werden, während sich die Kunststoffkomponenten im schmelzflüssigen Zustand befinden, um eine hohe Festigkeit des Schichtverbunds zu erreichen. Dabei können sich zwischen den Kunststoffen Verschlaufungen ausbilden, die eine gute Schichthaftung begünstigen.

Der Flüssigkeitsbehälter kann aus genau zwei Schalen zusammengesetzt sein, die in diesem Fall als Halbschalen bezeichnet werden. Dadurch, dass lediglich zwei Halbschalen zu einem Flüssigkeitsbehälter verbunden werden, kann die Zahl der Fügestellen geringgehalten werden.

Es versteht sich, dass innerhalb der Schalen oder Halbschalen vor deren Verbinden Funktionseinheiten, wie Pumpen, Füllstandgeber, Ventile und dergleichen montiert werden können.

Die zweite Schale kann in dem Formhohlraum der ersten Schale hergestellt werden, nachdem die erste Schale aus dem Formhohlraum entnommen worden ist. So können in kostengünstiger Weise zwei Schalen für einen Flüssigkeitsbehälter mit einem Werkzeug mit einem einzigen Formhohlraum hergestellt werden.

Die zweite Schale kann in einem von dem Formhohlraum der ersten Schale separaten Formhohlraum hergestellt werden. So kann eine von der ersten Schale abweichende Geometrie für die zweiten Schale vorgesehen werden.

Der Formhohlraum der zweiten Schale kann in einem separaten Spritzgusswerkzeug vorgesehen sein. Auf diese Weise kann die Fertigung der ersten Schale unabhängig von der Fertigung der zweiten Schale erfolgen.

Der von dem Formhohlraum der ersten Schale separate Formhohlraum der zweiten Schale kann in demselben Spritzgusswerkzeug vorgesehen sein, in dem auch der Formhohlraum der ersten Schale vorgesehen ist. Folglich können sowohl die erste Schale als auch die zweite Schale gleichzeitig in einem Spritzgusswerkzeug hergestellt werden.

Das Spritzgusswerkzeug kann zwei oder mehr Formhohlräume zum Herstellen von ersten Schalen und zweiten Schalen aufweisen. Beispielsweise können in einem Spritzgusswerkzeug vier Formhohlräume vorgesehen sein, wobei zwei Formhohlräume zum Herstellen von ersten Schalen vorgesehen sind und zwei weitere Formhohlräume zum Herstellen von zweiten Schalen vorgesehen sind. Auf diese Weise können in einem einzigen Spritzgusszyklus gleichzeitig Schalen für zwei Flüssigkeitsbehälter gefertigt werden.

Jedem Formhohlraum können eine oder mehrere Spritzgussdüsen zum Einspritzen der Kunststoffkomponenten zugeordnet sein. Sofern die zweite Schale in einem von dem Formhohlraum der ersten Schale separaten Formhohlraum hergestellt wird, weist der Formhohlraum der zweiten Schale ebenfalls einen Nebenhohlraum auf, der zur Aufnahme von überschüssigem Spritzgusswerkstoff vorgesehen ist.

Sofern der Formhohlraum der ersten Schale und der von dem Formhohlraum der ersten Schale separate Formhohlraum der zweiten Schale in einem Spritzgusswerkzeug vorgesehen sind, können deren Nebenhohlräume zumindest teilweise in Fluidverbindung zueinander stehen, so dass die erste Schale und die zweite Schale nach dem Spritzgießen zunächst über den überschüssigen, zu entfernenden Spritzgusswerkstoff stoffschlüssig miteinander verbunden sind. Auf diese Weise kann die manuelle oder automatisierte Entnahme der Schalen mit einem Entnahmewerkzeug vereinfacht werden.

Nach einer weiteren Ausgestaltung des Verfahrens ist vorgesehen, dass die bereitgestellte Spritzgussmaschine zum Mehrkomponenten-Sandwichspritzgießen eingerichtet ist, wobei die erste und zweite Kunststoffkomponente im Mehrkomponenten-Sandwichspritzgießen in den Formhohlraum und den Nebenhohlraum eingebracht werden, wobei das Einspritzen der ersten Kunststoffkomponente in den Formhohlraum zeitlich vor dem Einspritzen der zweiten Kunststoffkomponente beginnt und die zweite Kunststoffkomponente als Kernlage in die erste Kunststoffkomponente eingespritzt wird, so dass die erste Kunststoffkomponente die Kernlage umschließt.

Werden genau zwei Kunststoffkomponenten verarbeitet, handelt es sich um das Zwei-Komponenten-Sandwichspritzgießen. Mithilfe des Zwei-Komponenten-Sandwichspritzgießens kann in einfacher Weise ein im Querschnitt dreilagiger Wandungsaufbau erzielt werden, wobei eine Kernlage zumindest zweiseitig von Decklagen eingefasst wird. Die Kunststoffe werden dabei nach einem zeitlich versetzten Beginn der Einspritzung im weiteren Verlauf eines Einspritzzyklus gleichzeitig in den Formhohlraum und den Nebenhohlraum eingebracht, so dass von einer sequentiellen Coinjektion der Kunststoffkomponenten gesprochen werden kann.

Eine Nachdruckphase zum Ausgleich einer abkühlbedingten Schwindung kann über die zweite Kunststoffkomponente erreicht werden, welche die erste Kunststoffkomponente gegen die Formwandungen der Formhälften drückt.

Die erste Kunststoffkomponente und die zweite Kunststoffkomponente können über einen gemeinsamen Anschnitt bzw. Anguss in das Spritzgusswerkzeug eingebracht werden. Um die zweite Kunststoffkomponente vollständig von der ersten Kunststoffkomponente einzufassen, kann das Ende der Einspritzung der zweiten Kunststoffkomponente zeitlich vor dem Ende der Einspritzung der ersten Kunststoffkomponente liegen. Mit anderen Worten kann im Bereich des Angusses bzw. Anschnitts Material der ersten Kunststoffkomponente "nachgelegt" werden, um die zweite Kunststoffkomponente im Bereich des Anschnitts zur Umgebung hin zu versiegeln. Der Anguss bzw. Anschnitt kann in bekannter Weise durch Nachbearbeitung zumindest teilweise entfernt werden, z.B. durch Fräsen.

Die zweite Kunststoffkomponente kann als Sperrschicht bzw. Diffusionsbarriere für einen Kraftstoff dienen.

Das Verbinden der ersten und zweiten Schale kann durch Verschweißen erfolgen. Durch einen ergänzenden Umformvorgang kann die zweite Kunststoffkomponente der ersten Schale mit einer zweiten Kunststoffkomponente der zweiten Schale zur Ausbildung einer durchgehenden, vollflächigen Sperrschicht verbunden werden.

Gemäß einer weiteren Ausgestaltung ist vorgesehen, dass wenigstens drei Kunststoffkomponenten im Mehrkomponenten-Sandwichspritzgießen ineinander gespritzt werden, insbesondere eine Decklage, ein Haftvermittler und eine Kernlage. So kann ein fünfschichtiger Aufbau der ersten Schale erreicht werden. Es versteht sich, dass die zweite Schale in analoger Weise ebenfalls drei-, fünf- oder mehrschichtig aufgebaut werden kann.

Falls die Decklage und die Kernlage aus Werkstoffen gebildet sind, die chemisch und/oder physikalisch nicht in einer Weise kompatibel sind, dass eine Anhaftung im Bereich der Grenzflächen gewährleistet werden kann, dient der Haftvermittler als Zwischenlage zur Ausbildung eines Schichtverbunds. Der Haftvermittler bildet dabei sowohl eine haftende Verbindung zur Decklage als auch zur Kernlage aus.

Nach einer weiteren Ausgestaltung des Spritgussverfahrens ist vorgesehen, dass eine Formhälfte wenigstens zweiteilig aus einem Grundkörper und einem Formeinsatz zusammengesetzt ist, wobei insbesondere die Formwandung des Formhohlraums dem Grundkörper und eine Nebenwandung des Nebenhohlraums dem Formeinsatz zugeordnet ist. Der Formeinsatz kann unabhängig von dem Grundkörper gefertigt und bereitgestellt werden. Der Nebenhohlraum kann unabhängig von dem Grundkörper nachträglich optimiert werden.

Nach einer weiteren Ausgestaltung des Verfahrens ist vorgesehen, dass der Formhohlraum in einem Querschnitt betrachtet umfangsseitig vollständig von dem Nebenhohlraum eingefasst wird. Damit kann eine vollflächige Ausdehnung der zweiten Kunststoffkomponente der ersten Schale begünstigt werden.

Die erste Kunststoffkomponente kann beim Einspritzen in den Formhohlraum eine niedrigere Viskosität aufweisen als die zweite Kunststoffkomponente. Damit kann eine zuverlässige Ausfüllung des Formhohlraums und der Nebenkavität erreicht werden.

Nach einer weiteren Ausgestaltung des Verfahrens ist die erste Kunststoffkomponente ein Polyamid (PA), ein Polyphenylensulfid (PPS), ein Polyoxymethylen (POM) oder ein Polyphthalamid (PPA) und die zweite Kunststoffkomponente ein Polyphthalamid (PPA), ein Polyamid (PA), ein Polyoxymethylen (POM), ein Polyphenylensulfid (PPS), flüssigkristallines Polymer (LCP), Polyketon (PK) oder ein Ethylen-Vinylalkohol-Copolymer (EVOH).

Eine Kunststoffkomponente kann ein faserverstärkter Kunststoff sein. So kann beispielsweise ein Granulat bereitgestellt werden, das Fasergehalte von einschließlich 10 bis 60 Gewichtsprozent aufweist, insbesondere Fasergehalte von 20 bis einschließlich 40 Gewichtsprozent hat. Die Fasern können Kurzfasern mit einer Länge kleiner oder gleich 12 mm oder Langfasern mit einer Länge größer gleich 12 mm, insbesondere einer Länge von einschließlich 12 mm bis 25 mm, sein. Die Fasern können in einem zu plastifizierenden Granulat enthalten sein oder einem bereits plastifizierten Kunststoff beigemischt werden. Durch die Faserverstärkung kann ein robuster und formbeständiger Flüssigkeitsbehälter hergestellt werden.

Für den Fall eines fünfschichtigen Wandungsaufbaus ist nach einer weiteren Ausgestaltung des Verfahrens die erste Kunststoffkomponente ein High-Density-Polyethylene (HDPE), die zweite Kunststoffkomponente ein Haftvermittler und die dritte Kunststoffkomponente ein Ethylen-Vinylalkohol-Copolymer (EVOH).

Die erste Kunststoffkomponente kann beim Einspritzen in den Formhohlraum eine niedrigere Viskosität aufweisen als die zweite Kunststoffkomponente.

Die dritte Kunststoffkomponente kann im Wesentlichen die Viskosität der zweiten Kunststoffkomponente aufweisen, wobei "im Wesentliche gleich" bedeutet, dass eine Abweichung in der Viskosität der dritten Kunststoffkomponente gegenüber der zweiten Kunststoffkomponente in einem Bereich +/- 15%, insbesondere +/- 5%, liegen kann.

Wenn vorliegend von "Viskosität" gesprochen wird, so handelt es sich dabei um die sich mit der Temperatur der Kunststoffkomponenten ändernde, dynamische Viskosität der Kunststoffkomponenten.

Vor oder nach dem Verbinden der Schalen können eine oder mehrere Funktionseinheiten, wie eine oder mehrere Pumpen, Füllstandgeber, Ventile, Stutzen, Anschlusselemente oder dergleichen, an der ersten Schale und/oder der zweiten Schale befestigt werden. Damit können in einfacher Weise Funktionseinheiten in den Flüssigkeitsbehälter integriert werden.

Nach einer weiteren Ausgestaltung des Verfahrens weist das Spritzgusswerkzeug eine Drossel auf, die zum Regulieren eines Schmelzeflusses von dem Formhohlraum zum Nebenhohlraum vorgesehen ist. Durch die auch in dem Nebenhohlraum vorhandene Mischung aus erstem und zweitem Kunststoff kann das überschüssige Material lediglich einem "Downcycling"-Prozess zugeführt werden. Die Drossel dient insbesondere dazu, die in den Nebenhohlraum gelangende Menge von erstem und zweiten Kunststoff möglichst gering zu halten, um Materialkosten einzusparen. Mit anderen Worten ermöglicht die Drossel eine Verkleinerung eines erforderlichen Nebenkammervolumens. Bei der Drossel handelt es sich daher insbesondere um eine schmelztechnische Drossel.

Die Drossel kann in einfacher und kostengünstiger Weise dadurch bereitgestellt werden, dass die Drossel durch eine Verengung eines Formquerschnitts gebildet ist.

Die Drossel kann daher eine Verengung oder Verjüngung sein, die den Formhohlraum umfangsseitig teilweise einfasst, insbesondere vollständig einfasst. Beim Einspritzen des Kunststoffs füllt sich daher zumindest abschnittsweise erst die Drossel, bevor der Kunststoff in den Nebenhohlraum übertritt.

Die Verengung oder Verjüngung kann zumindest abschnittsweise, insbesondere vollständig, zwischen dem Formhohlraum und dem Nebenhohlraum angeordnet sein, so dass eine Fluidverbindung zwischen dem Formhohlraum und dem Nebenhohlraum im Bereich der Drossel über die Drossel hergestellt ist. Ausgehend von einem Anguss gelangt ein Kunststoff daher zunächst in den Formhohlraum und nach dem Passieren der Drossel in den Nebenhohlraum.

Es versteht sich, dass eine solche Verjüngung oder Verengung zwischen dem Formhohlraum und dem Nebenhohlraum auch nur abschnittsweise vorgesehen sein kann. Je nach Bauteilgeometrie und dem Fließfrontenverlauf der Kunststoffe während des Spritzgussvorgangs kann die Anordnung von einer Drossel oder lokaler Drosselbereiche zwischen dem Formhohlraum und dem Nebenhohlraum derart angepasst sein, dass sich insbesondere eine vollflächige Ausbildung eines zwei-, drei- oder mehrschichtigen Wandungsaufbaus ergibt, bei einer möglichst geringen Menge von überschüssigem Material im Bereich des Nebenhohlraums.

Mit Auftreffen auf eine schmelztechnische Drossel kann bei einer Coinjektion z.B. der Materialfluss eines gegenüber dem ersten Material zähflüssigeren bzw. höherviskosen, zweiten Materials in Richtung des Nebenhohlraums reduziert werden. Dies begünstigt ein Durchdringen von angrenzenden Bereich ersten Materials mit zweitem Material bzw. das Ausbilden einer vollflächigen Schichtausbildung mit zweitem Material im Formhohlraum.

Die Drossel kann eine Fluidverbindung zwischen dem Formhohlraum und dem Nebenhohlraum lokal vollständig unterbrechen. So kann die Drossel Steg- oder Wandungssegmente aufweisen, die zwischen dem Formhohlraum und dem Nebenholraum vorgesehen sind.

Gemäß einer weiteren Ausgestaltung des Verfahrens wird ein Verfahren angegeben, wobei Formschieber zum Freigeben und Verschließen des Nebenhohlraums vorgesehen sind, mit den Verfahrensschritten:
- teilweises oder vollständiges Verschließen der Fluidverbindung zwischen dem Formhohlraum und dem Nebenhohlraum durch die Formschieber, insbesondere vor dem Einspritzen der ersten Kunststoffkomponente und/oder der zweiten Kunststoffkomponente;
- teilweises oder vollständiges Freigeben der Fluidverbindung zwischen dem Formhohlraum und dem Nebenhohlraum, insbesondere nach dem Einspritzen der ersten Kunststoffkomponente und/oder der zweiten Kunststoffkomponente.

Die Formschieber könne daher als Drossel zur Regulierung eines Schmelzeflusses zwischen dem Formhohlraum und dem Nebenhohlraum vorgesehen sein.

Die Formschieber können eine variable Drossel zwischen dem Formhohlraum und den Nebenhohlraum bilden.

Beispielsweise können die Formschieber zum Zeitpunkt des Einspritzens der ersten Kunststoffkomponente ganz oder teilweise geschlossen sein, um eine Fluidverbindung zwischen dem Formhohlraum und dem Nebenhohlraum teilweise oder vollständig zur unterbrechen. Nach oder mit dem Zeitpunkt des Einspritzens der zweiten Kunststoffkomponente können die Formschieber ganz oder teilweise geöffnet werden, um eine Fluidverbindung zwischen dem Formhohlraum und dem Nebenhohlraum teilweise oder vollständig zu öffnen.

Mit Hilfe der Drossel kann der Material- und Energieeinsatz im Spritzgussverfahren reduziert werden. Durch eine mögliche Reduzierung eines Volumens des Nebenhohlraums können die Größe des Werkzeugs an sich, der Aufspannplatten für das Werkzeug und die erforderliche Schließkraft der Spritzgussmaschine reduziert werden. Insgesamt können hierdurch die Herstellkosten gesenkt werden.

Gemäß einem weiteren Aspekt betrifft die Erfindung einen Flüssigkeitsbehälter für ein Kraftfahrzeug, wobei der Flüssigkeitsbehälter durch das erfindungsgemäße Verfahren hergestellt worden ist. So kann in kostengünstiger Weise ein Flüssigkeitsbehälter hergestellt werden, dessen Schalen einen Zwei- oder Mehrschichtaufbau bis in die Randbereiche aufweisen, so dass eine Sperrschicht ausgebildet werden kann.

Nach einer weiteren Ausgestaltung des Flüssigkeitsbehälters ist vorgesehen, dass der Flüssigkeitsbehälter einen wenigstens dreischichtigen Wandungsaufbau hat, wobei eine Sperrschicht zumindest abschnittsweise wenigstens zweiseitig von Decklagen eingefasst ist und wobei die Sperrschicht insbesondere vollflächig in dem Wandungsaufbau ausgebildet ist. Bei der Sperrschicht kann es sich um eine Diffusionsbarriere handeln, um eine Bevorratung eines Kraftstoffs unter geringer diffusionsbedingter Emission zu ermöglichen.

Beispielsweise kann die Sperrschicht eine PPA-Schicht oder eine EVOH-Schicht sein, wobei eine EVOH-Schicht eine Sperrschicht für Kohlenwasserstoffe und Sauerstoff bildet.

Der Schichtaufbau kann lokal mehr als drei Schichten aufweisen, insbesondere durch ein wechselseitiges Verschweißen, Verkleben und/oder Durchdringen der Schichten in zwischen den Schalen gebildeten Verbindungs- oder Fügebereichen. Insbesondere können zusätzliche Kleb- oder Dichtstoffe in den Fügebereichen eingebracht sein.

Der Wandungsaufbau kann fünf- oder mehrschichtig sein, insbesondere durch die Verwendung eines Haftvermittlers, wie voranstehend bereits erläutert, oder die Einbindung zusätzlicher Sperrschichten oder Decklagen.

Die Wanddicke einer Schale des Flüssigkeitsbehälters kann 3 mm +/- 1 mm betragen. So kann ein besonders leichter Flüssigkeitsbehälter unter geringem Materialaufwand hergestellt werden. Die Wanddicke bezieht sich dabei insbesondere auf die Wanddicke einer Schale vor dem Verbinden mit einer weiteren Schale. Es versteht sich, dass sich die Wanddicke des Flüssigkeitsbehälters in einem Verbindungsbereich, in dem die Schalen des Flüssigkeitsbehälters aneinander anliegen, aus der Summe der Wanddicken der aneinander liegenden Schalen ergeben kann. So kann die Wanddicke des Flüssigkeitsbehälters im Wesentlichen ebenfalls 3 mm +/- 1 mm betragen, in einem Verbindungsbereich, in dem zwei Schalen miteinander verbunden sind, jedoch lokal auf ca. 6 mm verdickt sein.

Gemäß einem letzten Aspekt betrifft die Erfindung ein Spritzgusswerkzeug zum Herstellen eines Flüssigkeitsbehälters für ein Kraftfahrzeug, mit wenigstens einen Formhohlraum, der zum Abbilden der Geometrie einer ersten Schale und/oder einer zweiten Schale des Flüssigkeitsbehälters vorgesehen ist und der zwischen Formwandungen wenigstes einer ersten und einer zweiten Formhälfte des Spritzgusswerkzeugs gebildet ist, wobei das Spritzgusswerkzeug wenigstens einen Nebenhohlraum hat, wobei der Nebenhohlraum mit dem Formhohlraum in Fluidverbindung steht, wobei der Nebenhohlraum in einem von einem Angussbereich beabstandeten Randbereich des Formhohlraums zumindest abschnittsweise an den Formhohlraum angrenzt, und wobei der Nebenhohlraum zur Aufnahme von überschüssigem Spritzgusswerkstoff vorgesehen ist.

Wie voranstehend bereits diskutiert, begünstigt die Ausgestaltung des Spritzgusswerkzeugs eine insbesondere vollflächige Ausbildung eines zwei-, drei- oder mehrschichtigen Wandungsaufbaus des Flüssigkeitsbehälters.

Nach einer weiteren Ausgestaltung weist das Spritzgusswerkzeug eine Drossel auf, die zum Regulieren eines Schmelzeflusses von dem Formhohlraum zum Nebenhohlraum vorgesehen ist. Die Drossel ermöglicht eine Verkleinerung eines erforderlichen Nebenkammervolumens. Bei der Drossel handelt es sich daher insbesondere um eine schmelztechnische Drossel.

Die Drossel kann in einfacher und kostengünstiger Weise dadurch bereitgestellt werden, dass die Drossel durch eine Verengung eines Formquerschnitts gebildet ist.

Die Drossel kann daher eine Verengung oder Verjüngung sein, die den Formhohlraum umfangsseitig teilweise einfasst, insbesondere vollständig einfasst. Beim Einspritzen des Kunststoffs füllt sich daher zumindest abschnittsweise erst die Drossel, bevor der Kunststoff in den Nebenhohlraum übertritt.

Die Verengung oder Verjüngung kann zumindest abschnittsweise, insbesondere vollständig, zwischen dem Formhohlraum und dem Nebenhohlraum angeordnet sein, so dass eine Fluidverbindung zwischen dem Formhohlraum und dem Nebenhohlraum im Bereich der Drossel über die Drossel hergestellt ist. Ausgehend von einem Anguss gelangt ein Kunststoff daher zunächst in den Formhohlraum und nach dem Passieren der Drossel in den Nebenhohlraum.

Es versteht sich, dass eine solche Verjüngung oder Verengung zwischen dem Formhohlraum und dem Nebenhohlraum auch nur abschnittsweise vorgesehen sein kann. Je nach Bauteilgeometrie und dem Fließfrontenverlauf während des Spritzgussvorgangs kann die Anordnung einer vollständig umlaufenden Drossel oder mehrere lokaler Drosselbereiche zwischen dem Formhohlraum und dem Nebenhohlraum derart angepasst sein, dass eine insbesondere vollflächige Ausbildung eines zwei-, drei- oder mehrschichtigen Wandungsaufbaus, bei einer möglichst geringen Menge von überschüssigem Material im Bereich des Nebenhohlraums, begünstigt wird.

Mit Auftreffen auf eine schmelztechnische Drossel kann bei einer Coinjektion z.B. der Materialfluss eines gegenüber dem ersten Material zähflüssigeren bzw. höherviskosen, zweiten Materials in Richtung des Nebenhohlraums reduziert werden. Dies begünstigt ein Durchdringen von angrenzenden Bereich ersten Materials mit zweitem Material bzw. das Ausbilden einer vollflächigen Schichtausbildung mit zweitem Material im Formhohlraum.

Die Drossel kann zur lokalen Regulierung des Schmelzeflusses segmentiert sein. In einem oder mehreren Teilbereichen kann der Formhohlraum daher unmittelbar und ohne eine zwischengeschaltete Drossel in den Nebenhohlraum übergehen. In einem oder mehreren weiteren Teilbereichen kann zwischen dem Formhohlraum und dem Nebenhohlraum die Drossel vorgesehen sein. So kann die Drossel in einer Draufsicht auf eine Formhälfte betrachtet beispielsweise entlang zweier Längsseiten eines Formhohlraums zwischen dem Formhohlraum und dem Nebenhohlraum angeordnet sein, während entlang zweier Querseiten des Formhohlraums keine Drossel zwischen den Formhohlraum und dem Nebenhohlraum angeordnet ist.

Die Drossel kann den Formhohlraum in einem Querschnitt oder einer Draufsicht betrachtet vollständig einfassen. Eine Regulierung des Schmelzeflusses, insbesondere eine lokale Regulierung des Schmelzeflusses, kann hierbei dadurch erfolgen, dass die Drossel abschnittweise einen geringeren oder höheren Widerstand für den Schmelzefluss bildet. Dies kann beispielsweise durch einen abschnittweise angepassten Drosselquerschnitt erfolgen.

Die Drossel kann dazu eingerichtet sein, eine Fluidverbindung zwischen dem Formhohlraum und dem Nebenhohlraum lokal vollständig zu unterbrechen. So kann die Drossel Steg- oder Wandungssegmente aufweisen, die zwischen dem Formhohlraum und dem Nebenholraum vorgesehen sind.

Gemäß einer weiteren Ausgestaltung wird ein Spritzgusswerkzeug angegeben, wobei Formschieber zum Freigeben und Verschließen des Nebenhohlraums vorgesehen sind.

Die Formschieber können daher als Drossel zur Regulierung eines Schmelzeflusses zwischen dem Formhohlraum und dem Nebenhohlraum dienen.

Die Formschieber können als variable Drossel zwischen dem Formhohlraum und den Nebenhohlraum ausgestaltet sein.

Beispielsweise können die Formschieber zum Zeitpunkt des Einspritzens der ersten Kunststoffkomponente ganz oder teilweise geschlossen sein, um eine Fluidverbindung zwischen dem Formhohlraum und dem Nebenhohlraum teilweise oder vollständig zur unterbrechen. Nach oder mit dem Zeitpunkt des Einspritzens der zweiten Kunststoffkomponente können die Formschieber ganz oder teilweise geöffnet werden, um eine Fluidverbindung zwischen dem Formhohlraum und dem Nebenhohlraum teilweise oder vollständig zu öffnen.

Die Formschieber können zwischen zwei Endlagen, insbesondere einer Offenstellung und einer Schließstellung, stufenlos verstellbar sein.

Mit Hilfe der Drossel kann der Material- und Energieeinsatz im Spritzgussverfahren reduziert werden. Durch eine mögliche Reduzierung eines Volumens des Nebenhohlraums können die Größe des Werkzeugs an sich, der Aufspannplatten für das Werkzeug und die erforderliche Schließkraft der Spritzgussmaschine reduziert werden. Insgesamt können hierdurch die Herstellkosten gesenkt werden.

Die Formschieber können ausschließlich an der ersten Formhälfte angeordnet sein.

Die Formschieber können ausschließlich an der zweiten Formhälfte angeordnet sein.

Die Formschieber können an der ersten Formhälfte und der zweiten Formhälfte angeordnet sein.

Es können erste Formschieber zur Herstellung einer ersten Schale des Flüssigkeitsbehälters vorgesehen und an der ersten Formhälfte angeordnet sein. Es können zweite Formschieber zur Herstellung einer zweiten Schale des Flüssigkeitsbehälters vorgesehen und an der ersten Formhälfte angeordnet sein.

Es versteht sich, dass das Spritzgusswerkzeug eine oder mehrere Entlüftungsöffnungen zum Entlüften des Formhohlraums und/oder des Nebenhohlraums während des Spritzgussvorgangs aufweisen kann.

Nachfolgend wird die Erfindung anhand einer Ausführungsbeispiele darstellenden Zeichnung näher beschrieben. Es zeigen jeweils schematisch:
- Fig. 1: einen Flüssigkeitsbehälter für ein Kraftfahrzeug;
- Fig. 2: eine Spritzgussmaschine mit einem Spritzgusswerkzeug;
- Fig. 3: einen Zweikomponenten-Spritzguss gemäß Fig. 2;
- Fig. 4: einen Mehrkomponenten-Spritzguss;
- Fig. 5: das Spritzgusswerkzeug aus Fig. 2;
- Fig. 6: ein Spritzgusswerkzeug mit einer Drossel;
- Fig. 7: einen Füllvorgang für ein Spritzgusswerkzeug aus Fig. 6;
- Fig. 8: einen Füllvorgang für ein Spritzgusswerkzeug gemäß Fig. 5 bzw. Fig. 2.

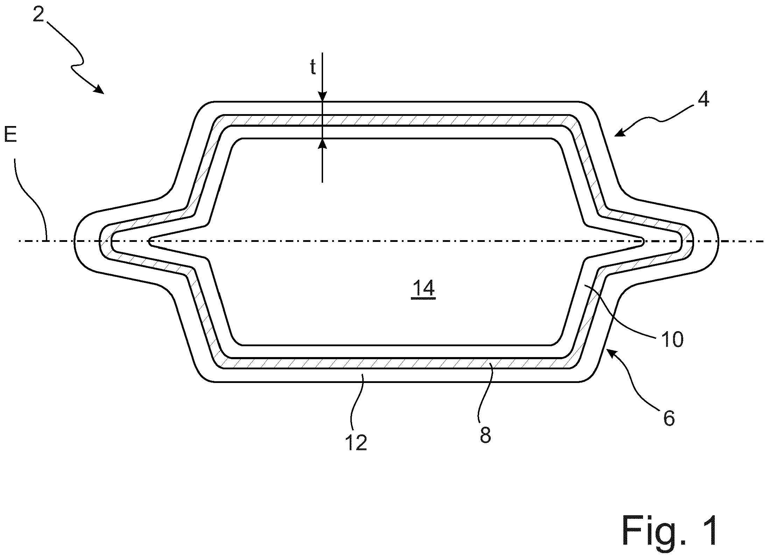

Fig. 1 zeigt einen Flüssigkeitsbehälter 2 für ein Kraftfahrzeug (nicht dargestellt), wobei es sich vorliegend um einen Kraftstofftank 2 handelt. Der Kraftstofftank 2 ist aus zwei Halbschalen 4, 6, einer ersten Schale 4 und einer zweiten Schale 6, zusammengesetzt, die im Bereich einer Ebene E miteinander verbunden worden sind.

Der Flüssigkeitsbehälter 2 hat einen dreischichtigen Wandungsaufbau. Eine Sperrschicht 8 wird zweiseitig von einer inneren Decklage 10 und einer äußeren Decklage 12 eingefasst.

Die Sperrschicht 8 ist vollflächig in dem Wandungsaufbau ausgebildet. In dem in Fig. 1 gezeigten Querschnitt wird ein Hohlraumvolumen 14, das zur Bevorratung von Kraftstoff vorgesehen ist, vollständig von der Sperrschicht 8 umschlossen. Die Sperrschicht 8 stellt eine Diffusionsbarriere dar, um eine diffusionsbedingte Emission während der Bevorratung des Kraftstoffs gering zu halten.

Eine Wanddicke t der Schalen 4, 6 des Flüssigkeitsbehälters 2 beträgt 3mm +/- 1 mm.

Der Flüssigkeitsbehälter 2 ist mit einem erfindungsgemäßen Verfahren hergestellt worden, das nachfolgend erläutert wird.

In einem ersten Schritt wird eine Spritgussmaschine 16 bereitstellt, die zum Zweikomponenten-Sandwichspritzgießen eingerichtet ist.

Die Spritzgussmaschine 16 hat ein Spritzgusswerkzeug 18. Das Spritzgusswerkzeug 18 hat wenigstens einen Formhohlraum 20, der zum Abbilden der Geometrie der ersten Schale 4 des Flüssigkeitsbehälters 2 vorgesehen ist. Vorliegend ist in dem Formhohlraum 20 die Schale 4 aufgenommen. Der Formhohlraum 20 ist zwischen Formwandungen 22, 24 wenigstes einer ersten und einer zweiten Formhälfte 26, 28 des Spritzgusswerkzeugs 18 gebildet.

Das Spritzgusswerkzeug 18 hat einen Nebenhohlraum 30. Der Nebenhohlraum 30 steht mit dem Formhohlraum 20 in Fluidverbindung. Der Nebenhohlraum 30 grenzt in einem von einem Angussbereich 32 beabstandeten Randbereich 34 des Formhohlraums 20 zumindest abschnittsweise an den Formhohlraum 20 an. Der Nebenhohlraum 30 ist zur Aufnahme von überschüssigem Spritzgusswerkstoff 36 vorgesehen. Vorliegend ist der Nebenhohlraum 30 mit überschüssigem Spritzgusswerkstoff 36 gefüllt. Die erste Schale 4 ist durch Plastifizieren und Einspritzen einer ersten Kunststoffkomponente 38 und Plastifizieren und Einspritzen einer zweiten Kunststoffkomponente 40 in den Formhohlraum 20 hergestellt worden.

Die erste und die zweite Kunststoffkomponente 38, 40 sind entlang einer Grenzfläche 42 miteinander verbunden. Die erste Kunststoffkomponente 38 liegt an der Formwandung 22 der ersten Formhälfte 26 und an der Formwandung 24 der zweiten Formhälfte 28 an. Die zweite Kunststoffkomponente 40 und die Grenzfläche 42 sind von den Formwandungen 22, 24 beabstandet.

Der Nebenhohlraum 36 ist mit überschüssigem Spritzgusswerkstoff 36 der ersten und zweiten Kunststoffkomponente 38, 40 gefüllt.

Die zweite Schale 6 kann in analoger Weise hergestellt werden.

Nach der Entnahme aus der jeweiligen Form werden die erste und zweite Schale 4, 6 miteinander verbunden, so dass eine durchgehende Sperrschicht 8 gebildet wird (Fig. 1). Dies kann durch Erhitzen und Verpressen der Schichten erreicht werden.

Das Entfernen des überschüssigen Spritzgusswerkstoffs 36 der ersten und zweiten Kunststoffkomponente 38, 40 erfolgt vorliegend nach dem Verbinden der Schalen 4, 6 zu dem Flüssigkeitsbehälter 2. An dem fertigen Flüssigkeitsbehälter 2 ist der überschüssige Spritzgusswerkstoff 36 nicht mehr vorhanden (Fig. 1).

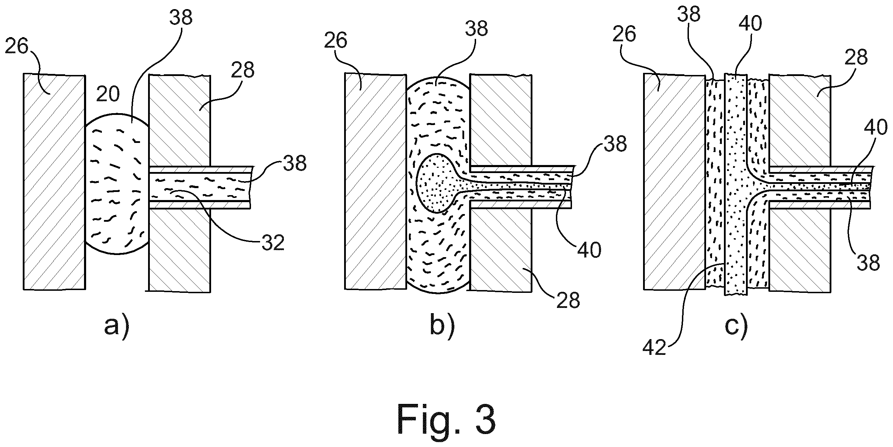

Zum Ausbilden des dreischichtigen Aufbaus der Schale 4 werden die Kunststoffkomponenten 38, 40 sequentiell ineinander gespritzt. Die erste und zweite Kunststoffkomponente 38, 40 werden im Zweikomponenten-Sandwichspritzgießen in den Formhohlraum 20 und den Nebenhohlraum 30 eingebracht (Fig. 3). Das Einspritzen der ersten Kunststoffkomponente 38 in den Formhohlraum 20 (Fig. 3a) beginnt zeitlich vor dem Einspritzen der zweiten Kunststoffkomponente 40 (Fig. 3b). Die zweite Kunststoffkomponente 40 wird als Kernlage in die erste Kunststoffkomponente 38 eingespritzt, so dass die erste Kunststoffkomponente 38 die Kernlage 40 umschließt. Die erste Kunststoffkomponente 38 ist ein Polyamid (PA) und die zweite Kunststoffkomponente 40 ist ein Polyphthalamid (PPA).

Durch ein Entfernen des überschüssigen Spritzgusswerkstoffs 36 vor dem Verbinden mit einer weiteren Schale, ergeben sich an einer Schale 4, 6 drei separate Schichten 8, 10, 12, wobei die Schicht 8 vorliegend aus Polyphthalamid (PPA) und die Schichten 10 und 12 aus Polyamid (PA) hergestellt sind.

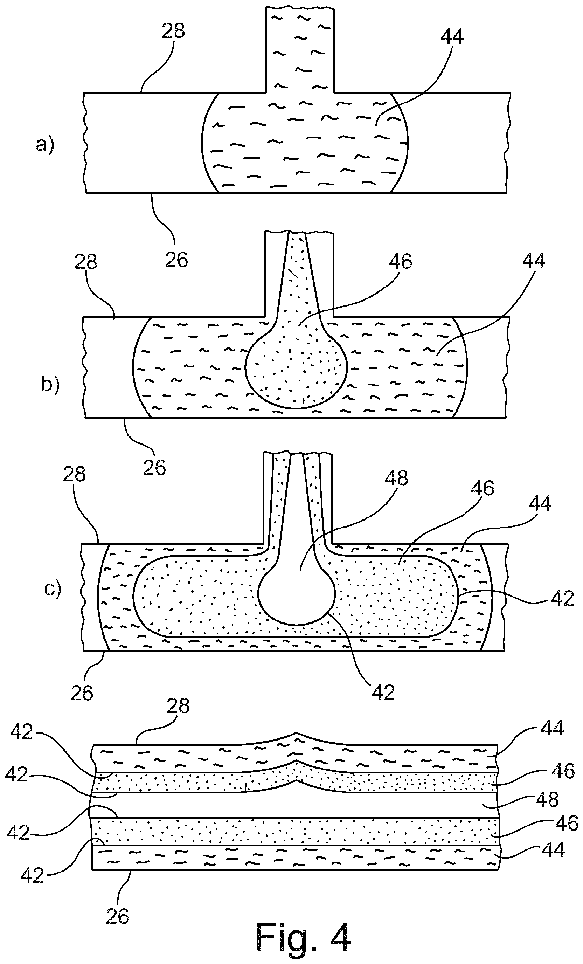

Nach einer alternativen Ausgestaltung des Verfahrens werden wenigstens drei Kunststoffkomponenten 44, 46, 48 im Mehrkomponenten-Sandwichspritzgießen ineinander gespritzt und zwar eine Decklage 44, ein Haftvermittler 46 und eine Kernlage 48 bzw. Sperrschicht 48, so dass sich ein fünfschichtiger Wandungsaufbau ergibt (Fig. 4).

Die Decklage 44 ist ein High-Density-Polyethylene (HDPE) Die Sperrschicht ist ein Ethylen-Vinylalkohol-Copolymer (EVOH). Das HDPE weist beim Einspritzen in den Formhohlraum 20 eine niedrigere Viskosität auf als der Haftvermittler, wobei das EVOH im Wesentlichen die Viskosität des Haftvermittlers aufweist.

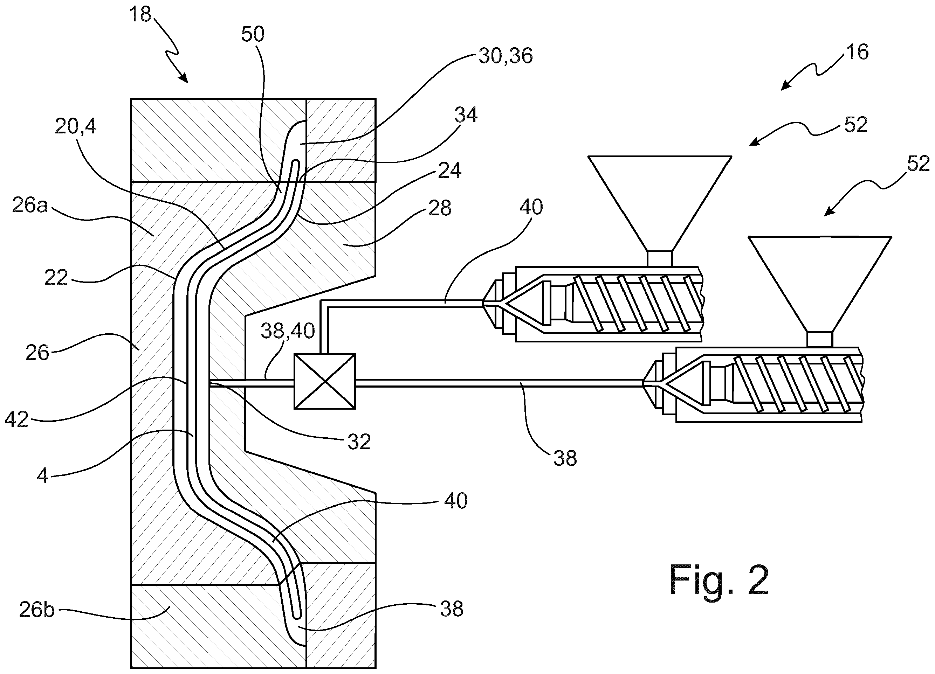

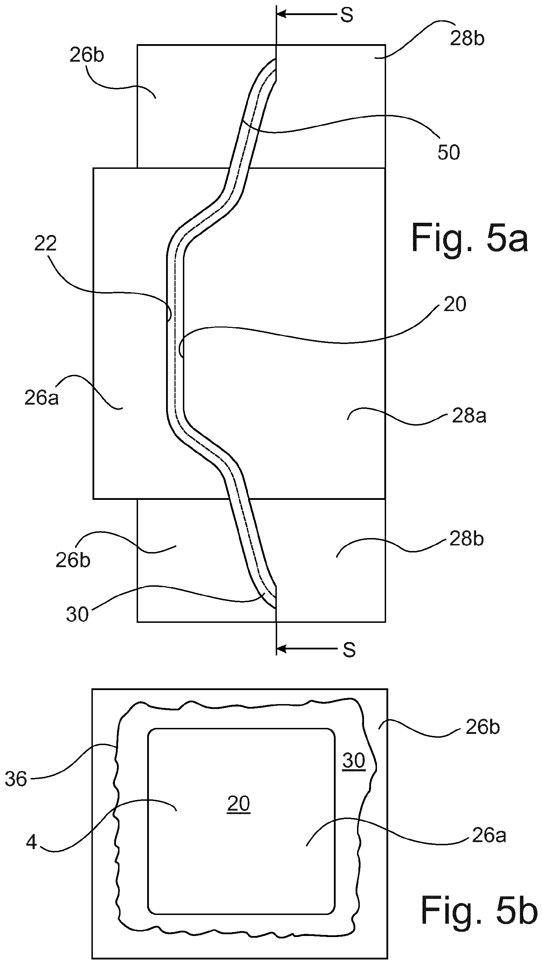

Die Formhälfte 26 ist wenigstens zweiteilig aus einem Grundkörper 26a und einem Formeinsatz 26b zusammengesetzt, wobei die Formwandung 22 des Formhohlraums 20 dem Grundkörper 26a und eine Nebenwandung 50 des Nebenhohlraums 30 dem Formeinsatz 26b zugeordnet ist. Gleichermaßen ist die Formhälfte 28 wenigstens zweiteilig aus einem Grundkörper 28a und einem Formeinsatz 28b zusammengesetzt (Fig. 2, Fig. 5a).

Der Formhohlraum 20 wird in einem Querschnitt entlang der Schnittebene S betrachtet umfangsseitig vollständig von dem Nebenhohlraum 30 eingefasst (Fig. 5a, Fig. 5a). Auf diese Weise kann eine homogene Schichtverteilung innerhalb der ersten Schale 4 erreicht werden, wobei Inhomogenitäten in der Schichtausbreitung in Form des überschüssigen Spritzgusswerkstoffs 36 in den Nebenhohlraum 30 verlagert werden (Fig. 5b). Die Sperrschicht 8 wird daher vollflächig über die gesamte Wandung der Schale 4 ausgebildet. Die Schale 6 kann in analoger Weise hergestellt werden.

Die erste Kunststoffkomponente 38 weist beim Einspritzen in den Formhohlraum 20 eine niedrigere Viskosität auf als die zweite Kunststoffkomponente 40. Die Temperatur der Kunststoffe 38, 40 wird dabei im Bereich einer jeweiligen Schmelz- und Fördereinheit 52 der Spritzgussmaschine 16 eingestellt (Fig. 2).

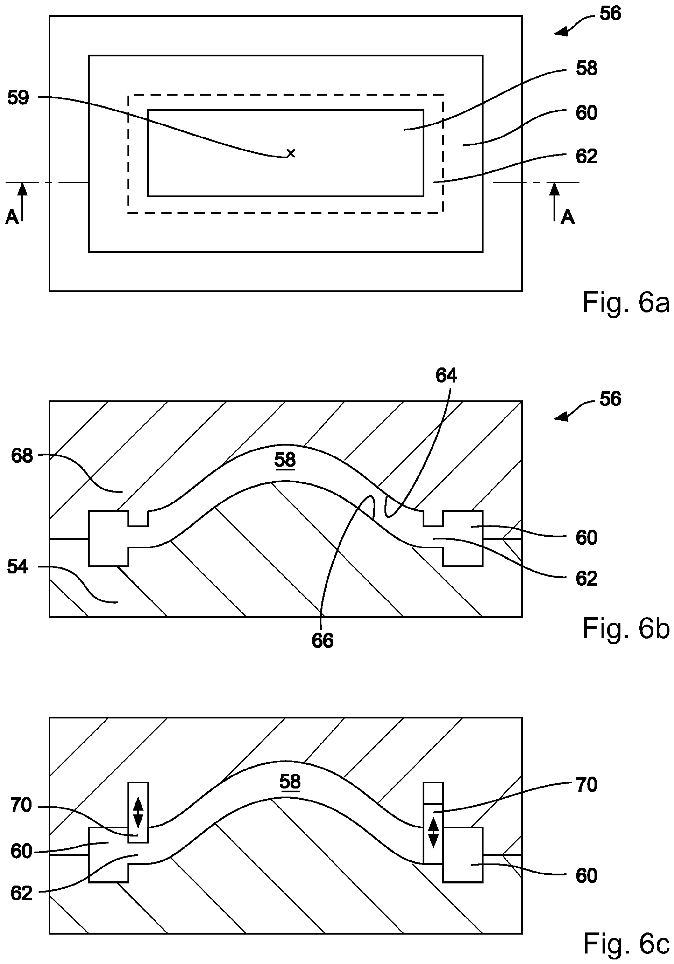

Fig. 6a zeigt schematisch ein Spritzgusswerkzeug 56 in einer Draufsicht. Das Spritzgusswerkzeug 56 hat einen Formhohlraum 58. Das Spritzgusswerkzeug 56 hat einen Nebenhohlraum 60. Das Spritzgusswerkzeug 56 hat eine Drossel 62. Die Drossel 62 ist zum Regulieren eines Schmelzeflusses von dem Formhohlraum 58 zu dem Nebenhohlraum 60 vorgesehen, wobei die Schmelze über einen Anguss 59 in den Formhohlraum 58 eingebracht wird.

Fig. 6b zeigt einen Querschnitt des Spritzgusswerkzeugs 56 entlang einer Schnittlinie A-A, wobei in dem Schnitt sowohl eine erste Formhälfte 54 als auch eine zweite Formhälfte 68 des Spritzgusswerkzeug 56 dargestellt sind. In dem in Fig. 6b dargestellten Beispiel ist die Drossel 62 einstückig in das Spritzgusswerkzeug 56 eingearbeitet.

Die Drossel 62 ist im Beispiel gemäß Fig. 6b als eine an den Formhohlraum 58 angrenzende, lokale Verengung ausgebildet. Die Drossel 62 stellt eine schmelztechnische Drossel zwischen Formhohlraum 58 und dem Nebenhohlraum 60 dar. Der Abstand der einander zugewandten Formwandungen 64 und 66 ist im Bereich der Drossel 62 geringer, als im Bereich des Formhohlraums 58 und im Bereich des Nebenhohlraums 60.

Fig. 6c zeigt eine Variante, in der die Drossel 62 mithilfe von Formschiebern 70 ausgestaltet wird, der relativ zur ersten Formhälfte 54 und zur zweiten Formhälfte 68 verschiebbar sind, eine Fluidverbindung zwischen dem Formhohlraum 58 und dem Nebenhohlraum 60 zu sperren oder freizugeben. Es versteht sich, dass das Werkzeug 56 eine Mehrzahl von Formschiebern 70 aufweisen kann.

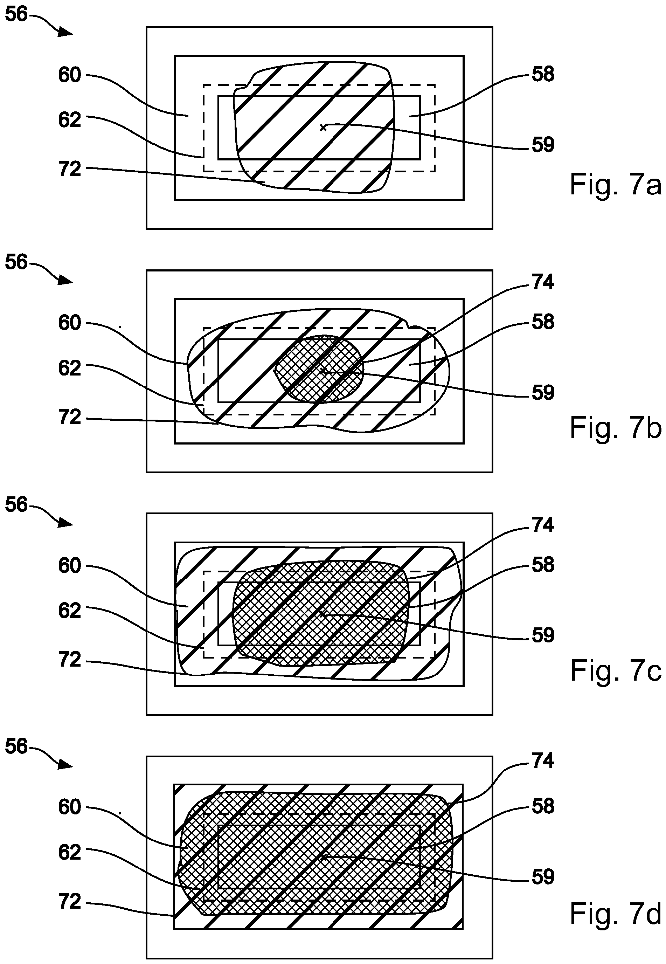

Fig. 7 zeigt in den Teilschritten a bis d einen Füllvorgang für die mit einer Drossel 62 versehene Spritzgussform 56. Wie den Figuren zu entnehmen ist, lässt sich der Materialfluss einer ersten Kunststoffkomponente 72 und einer zweiten Kunststoffkomponente 74 mithilfe der Drossel 62 derart einstellen, dass der Verlauf der Fließfronten im Wesentlichen der Grundform des Formhohlraums 58 folgt. Mithilfe der Drossel 62 kann auf diese Weise eine vollflächige Ausbildung eines zweischichtigen oder mehrschichtigen Wandungsaufbaus unter geringem Materialaufwand erreicht werden.

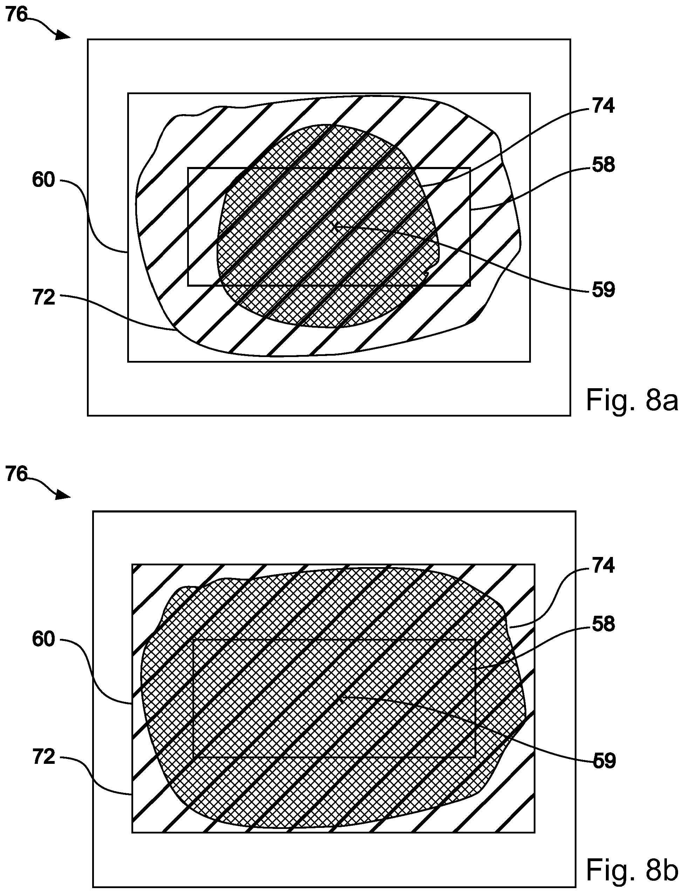

Fig. 8 zeigt exemplarisch den Füllvorgang für ein Spritzgusswerkzeug 76 ohne Drossel, wie es beispielsweise in den Figuren 1 und 5 dargestellt ist. Auch hier kann eine vollflächige Schichtausbildung einer ersten Kunststoffkomponente 72 mit einer zweiten Kunststoffkomponente 74 über den gesamten Formhohlraum 58 hinweg erreicht werden. Wie den Figuren 8a und 8b zu entnehmen ist, breiten sich die Materialien 72, 74 im Bereich der Nebenkavität 60 jedoch wesentlich großflächiger aus, und folgen weniger exakt der Grundfläche des Formhohlraums 58.

Drossel 62, Formschieber 70 und/oder Nebenhohlraum 60 können in separaten Formeinsätzen bereitgestellt werden.

### Bezugszeichen

- 2: Flüssigkeitsbehälter, Kraftstofftank
- 4: Halbschale, erste Schale
- 6: Halbschale, zweite Schale
- 8: Sperrschicht
- 10: innere Decklage
- 12: äußere Decklage
- 14: Hohlraumvolumen
- 16: Spritzgussmaschine
- 18: Spritzgusswerkzeug
- 20: Formhohlraum
- 22: Formwandung der ersten Formhälfte
- 24: Formwandung der zweiten Formhälfte
- 26: erste Formhälfte
- 26a: Grundkörper
- 26b: Formeinsatz
- 28: zweite Formhälfte
- 28a: Formeinsatz
- 28b: Grundkörper
- 30: Nebenhohlraum
- 32: Angussbereich
- 34: Randbereich des Formhohlraums
- 36: überschüssiger Spritzgusswerkstoff
- 38: erste Kunststoffkomponente
- 40: zweite Kunststoffkomponente
- 42: Grenzfläche
- 44: Decklage
- 46: Haftvermittler
- 48: Sperrschicht
- 50: Nebenwandung
- 52: Schmelz- und Fördereinheit
- 54: erste Formhälfte
- 56: Spritzgusswerkzeug / Spritzgussform
- 58: Formhohlraum
- 59: Anguss / Angussbereich
- 60: Nebenhohlraum
- 62: Drossel
- 64: Formwandung
- 66: Formwandung
- 68: zweite Formhälfte
- 70: Formeinsatz
- 72: erste Kunststoffkomponente
- 74: zweite Kunststoffkomponente
- 76: Spritzgusswerkzeug / Spritzgussform
- E: Ebene
- S: Schnittebene
- t: Wanddicke der Schalen 4, 6

## Patentansprüche

1. Verfahren zum Herstellen eines Flüssigkeitsbehälters (2) für ein Kraftfahrzeug, der aus wenigstens zwei Schalen (4, 6) zusammengesetzt ist, wobei die folgenden Verfahrensschritte durchlaufen werden:
- Bereitstellen einer Spritzgussmaschine (16),
- mit einem Spritzgusswerkzeug (18, 56, 76),
- wobei das Spritzgusswerkzeug (18, 56, 76) wenigstens einen Formhohlraum (20, 58) hat, der zum Abbilden der Geometrie einer ersten Schale (4) des Flüssigkeitsbehälters (2) vorgesehen ist und der zwischen Formwandungen (22, 24, 64, 66) wenigstes einer ersten und einer zweiten Formhälfte (26, 26a, 26b, 28, 28a, 28b, 54, 68) des Spritzgusswerkzeugs (18, 56, 76) gebildet ist,
- wobei das Spritzgusswerkzeug (18, 56, 76) wenigstens einen Nebenhohlraum (30, 60) hat,
- wobei der Nebenhohlraum (30, 60) mit dem Formhohlraum (20, 58) in Fluidverbindung steht,
- wobei der Nebenhohlraum (30, 60) in einem von einem Angussbereich (32, 59) beabstandeten Randbereich (34) des Formhohlraums (20, 58) zumindest abschnittsweise an den Formhohlraum (20, 58) angrenzt,
- wobei der Nebenhohlraum (30, 60) zur Aufnahme von überschüssigem Spritzgusswerkstoff (36) vorgesehen ist und
- wobei der Formhohlraum (20, 58) in einem Querschnitt betrachtet umfangsseitig vollständig von dem Nebenhohlraum (30, 60) eingefasst wird;
- Herstellen der ersten Schale (4) durch Plastifizieren und Einspritzen einer ersten Kunststoffkomponente (38, 44, 72) und einer zweiten Kunststoffkomponente (40, 46, 48, 74) in den Formhohlraum (20, 58),
- so dass die erste und die zweite Kunststoffkomponente (38, 40, 44, 46, 48, 72, 74) entlang einer Grenzfläche (42) miteinander verbunden werden und dass
- sich die erste Kunststoffkomponente (38, 44, 72) an eine Formwandung (22, 66) der ersten Formhälfte (26, 54) anlegt und die zweite Kunststoffkomponente (40, 46, 48, 74) und die Grenzfläche (42) von der Formwandung (22, 66) der ersten Formhälfte (26, 54) beabstandet sind,
- wobei wenigstens ein Teil des Nebenhohlraums (30, 60) mit überschüssigem Spritzgusswerkstoff (36) der ersten und zweiten Kunststoffkomponente (38, 40, 44, 46, 48, 72, 74) gefüllt wird;
- Herstellen einer zweiten Schale (6) des Flüssigkeitsbehälters (2);
- Verbinden der ersten und zweiten Schale (4, 6);
- Entfernen des überschüssigen Materials (36) der ersten und zweiten Kunststoffkomponente (38, 40, 44, 46, 48, 72, 74), wobei das Entfernen des überschüssigen Materials (36) vor oder nach dem Verbinden der Schalen (4, 6) erfolgt.

2. Verfahren nach Anspruch 1,
- wobei die bereitgestellte Spritzgussmaschine (16) zum Mehrkomponenten-Sandwichspritzgießen eingerichtet ist,
- wobei die erste und zweite Kunststoffkomponente (38, 40, 44, 46, 48, 72, 74) im Mehrkomponenten-Sandwichspritzgießen in den Formhohlraum (20, 58) und den Nebenhohlraum (30, 60) eingebracht werden,
- wobei das Einspritzen der ersten Kunststoffkomponente (38, 44, 72) in den Formhohlraum (20, 58) zeitlich vor dem Einspritzen der zweiten Kunststoffkomponente (40, 46, 48, 74) beginnt und
- die zweite Kunststoffkomponente (40, 46, 48, 74) als Kernlage in die erste Kunststoffkomponente (38, 44, 72) eingespritzt wird, so dass die erste Kunststoffkomponente (38, 44, 72) die Kernlage (40, 46, 48, 74) umschließt.

3. Verfahren nach Anspruch 2,
- wobei wenigstens drei Kunststoffkomponenten (38, 40, 44, 46, 48, 72, 74) im Mehrkomponenten-Sandwichspritzgießen ineinander gespritzt werden
- insbesondere eine Decklage (38, 44, 72), ein Haftvermittler (46) und eine Kernlage (40, 48, 74).

4. Verfahren nach einem der Ansprüche 1 bis 3,
- wobei eine Formhälfte (26, 28) wenigstens zweiteilig aus einem Grundkörper (26a, 28a) und einem Formeinsatz (26b, 28b) zusammengesetzt ist,
- wobei insbesondere die Formwandung (22, 24) des Formhohlraums (20) dem Grundkörper (26a, 28a) und eine Nebenwandung (50) des Nebenhohlraums (30) dem Formeinsatz (26b, 28b) zugeordnet ist.

5. Verfahren nach einem der Ansprüche 1 bis 4,
- wobei der Formhohlraum (20, 58) in einem Querschnitt betrachtet umfangsseitig vollständig von dem Nebenhohlraum (30, 60) eingefasst wird.

6. Verfahren nach einem der voranstehenden Ansprüche,
- wobei die erste Kunststoffkomponente (38, 44, 72) beim Einspritzen in den Formhohlraum (20, 58) eine niedrigere Viskosität aufweist als die zweite Kunststoffkomponente (40, 46, 48, 74).

7. Verfahren nach einem der voranstehenden Ansprüche,
- wobei die erste Kunststoffkomponente (38, 72) ein Polyamid (PA), ein Polyphenylensulfid (PPS), ein Polyoxymethylen (POM) oder ein Polyphthalamid (PPA)ist und
- wobei die zweite Kunststoffkomponente (40, 74) ein Polyphthalamid (PPA), ein Polyamid (PA), ein Polyoxymethylen (POM), ein Polyphenylensulfid (PPS), flüssigkristallines Polymer (LCP), Polyketon (PK) oder ein Ethylen-Vinylalkohol-Copolymer (EVOH) ist
und/oder
- wobei wenigstens eine Kunststoffkomponente ein faserverstärkter Kunststoff ist.

8. Verfahren nach Anspruch 3,
- wobei die erste Kunststoffkomponente (40, 72) ein High-Density-Polyethylene (HDPE) ist,
- wobei die zweite Kunststoffkomponente (46, 74) ein Haftvermittler ist und
- wobei die dritte Kunststoffkomponente (48) ein Ethylen-Vinylalkohol-Copolymer (EVOH) ist.

9. Verfahren nach Anspruch 8,
- wobei die erste Kunststoffkomponente (40, 72) beim Einspritzen in den Formhohlraum (20, 58) eine niedrigere Viskosität aufweist als die zweite Kunststoffkomponente (46, 74) und
- wobei die dritte Kunststoffkomponente (48) beim Einspritzen in den Formhohlraum (20, 58) im Wesentlichen die Viskosität der zweiten Kunststoffkomponente (46, 74) aufweist.

10. Verfahren nach einem der voranstehenden Ansprüche,
- wobei vor oder nach dem Verbinden der Schalen (4, 6) ein oder mehrere Funktionseinheiten, wie Pumpe, Füllstandgeber, Ventil, Stutzen, Anschlusselement oder dergleichen, an der ersten Schale (4) und/oder der zweiten Schale (6) befestigt werden.

11. Verfahren nach einem der voranstehenden Ansprüche,
- wobei das Spritzgusswerkzeug (18, 56, 76) eine Drossel (62) aufweist, die zum Regulieren eines Schmelzeflusses von dem Formhohlraum (20, 58) zum Nebenhohlraum (30, 60) vorgesehen ist.

12. Verfahren nach Anspruch 11,
- wobei die Drossel (62) durch eine Verengung eines Formquerschnitts gebildet ist.

13. Verfahren nach einem der voranstehenden Ansprüche,
- wobei Formschieber (70) zum Freigeben und Verschließen des Nebenhohlraums (30, 60) vorgesehen sind, mit den Verfahrensschritten:
- teilweises oder vollständiges Verschließen der Fluidverbindung zwischen dem Formhohlraum (20, 58) und dem Nebenhohlraum (30, 60) durch die Formschieber (70), insbesondere vor dem Einspritzen der ersten Kunststoffkomponente (38, 44, 72) und/oder der zweiten Kunststoffkomponente (40, 46, 48, 74);
- teilweises oder vollständiges Freigeben der Fluidverbindung zwischen dem Formhohlraum und dem Nebenhohlraum, insbesondere nach dem Einspritzen der ersten Kunststoffkomponente (38, 44, 72) und/oder der zweiten Kunststoffkomponente (40, 46, 48, 74).

14. Spritzgusswerkzeug zum Herstellen eines Flüssigkeitsbehälters für ein Kraftfahrzeug, mit
- wenigstens einen Formhohlraum (20, 58), der zum Abbilden der Geometrie einer ersten Schale (4) und/oder einer zweiten Schale (6) des Flüssigkeitsbehälters (2) vorgesehen ist und der zwischen Formwandungen (22, 24) wenigstes einer ersten und einer zweiten Formhälfte (26, 26a, 26b, 28, 28a, 28b, 54, 68) des Spritzgusswerkzeugs (18, 56, 76) gebildet ist,
- wobei das Spritzgusswerkzeug (18, 56, 76) wenigstens einen Nebenhohlraum (30, 60) hat,
- wobei der Nebenhohlraum (30, 60) mit dem Formhohlraum (20, 58) in Fluidverbindung steht,
- wobei der Nebenhohlraum (30, 60) in einem von einem Angussbereich (32, 59) beabstandeten Randbereich (34) des Formhohlraums (20, 58) zumindest abschnittsweise an den Formhohlraum (20, 58) angrenzt, und
- wobei der Nebenhohlraum (30, 60) zur Aufnahme von überschüssigem Spritzgusswerkstoff (36) vorgesehen ist **dadurch gekennzeichnet, dass**
- der Formhohlraum (20, 58) in einem Querschnitt betrachtet umfangsseitig vollständig von dem Nebenhohlraum (30, 60) eingefasst wird.

15. Spritzgusswerkzeug nach Anspruch 14,
- wobei das Spritzgusswerkzeug (18, 56, 76) eine Drossel (62) aufweist, die zum Regulieren eines Schmelzeflusses von dem Formhohlraum (20, 58) zum Nebenhohlraum (30, 60) vorgesehen ist.

16. Spritzgusswerkzeug nach einem der Ansprüche 14 oder 15,
- wobei die Drossel (62) durch eine Verengung eines Formquerschnitts gebildet ist
und/oder
- wobei die Drossel (62) zur lokalen Regulierung des Schmelzeflusses segmentiert ist
und/oder
- wobei die Drossel (62) den Formhohlraum in einem Querschnitt betrachtet vollständig einfasst.

17. Spritzgusswerkzeug nach einem der Ansprüche 14 bis 16,
- wobei einer oder mehrere Formschieber (70) zum Freigeben und Verschließen des Nebenhohlraums (30, 60) vorgesehen sind und
- wobei die Formschieber (70) insbesondere an einer ersten und/oder einer zweiten Formhälfte (26, 26a, 26b, 28, 28a, 28b, 54, 68) des Spritzgusswerkzeugs (18, 56, 76) angeordnet sind.

## Claims

1. A method for producing a liquid container (2) for a motor vehicle, which liquid container is assembled from at least two shells (4, 6), wherein the following method steps are performed:
- providing an injection molding machine (16),
- having an injection molding tool (18, 56, 76),
- wherein the injection molding tool (18, 56, 76) has at least one mold cavity (20, 58) which is provided for replicating the geometry of a first shell (4) of the liquid container (2) and which is formed between mold walls (22, 24, 64, 66) of at least one first and one second mold half (26, 26a, 26b, 28, 28a, 28b, 54, 68) of the injection molding tool (18, 56, 76),
- wherein the injection molding tool (18, 56, 76) has at least one auxiliary cavity (30, 60),
- wherein the auxiliary cavity (30, 60) is fluidically connected to the mold cavity (20, 58),
- wherein the auxiliary cavity (30, 60) adjoins the mold cavity (20, 58) at least in certain portions in an edge region (34), spaced apart from a gate region (32, 59), of the mold cavity (20, 58),
- wherein the auxiliary cavity (30, 60) is provided for receiving excess injection molding material (36), and
- wherein the mold cavity (20, 58) is, as viewed in a cross section, circumferentially completely enclosed by the auxiliary cavity (30, 60);
- producing the first shell (4) by plasticizing and injecting a first plastics component (38, 44, 72) and a second plastics component (40, 46, 48, 74) into the mold cavity (20, 58),
- such that the first and the second plastics component (38, 40, 44, 46, 48, 72, 74) are connected to one another along an interface and that
- the first plastics component (38, 44, 72) lies against a mold wall (22, 66) of the first mold half (26, 54), and the second plastics component (40, 46, 48, 74) and the interface (42) are spaced apart from the mold wall (22, 66) of the first mold half (26, 54),
- wherein at least a part of the auxiliary cavity (30, 60) is filled with excess injection molding material (36) of the first and second plastics component (38, 40, 44, 46, 48, 72, 74) ;
- producing a second shell (6) of the liquid container (2) ;
- connecting the first and second shell (4, 6);
- removing the excess material (36) of the first and second plastics component (38, 40, 44, 46, 48, 72, 74), wherein the removal of the excess material (36) is performed before or after the connection of the shells (4, 6).

2. The method as claimed in claim 1,
- wherein the provided injection molding machine (16) is configured for multi-component sandwich injection molding,
- wherein the injection of the first plastics component (38, 44, 72) into the mold cavity (20, 58) begins at a time before the injection of the second plastics component (40, 46, 48, 74), and
- the second plastics component (40, 46, 48, 74) is injected as a core layer into the first plastics component (38, 44, 72), such that the first plastics component (38, 44, 72) encloses the core layer (40, 46, 48, 74).

3. The method as claimed in claim 2,
- wherein at least three plastics components (38, 40, 44, 46, 48, 72, 74) are injected one into the other in the multi-component sandwich injection molding process,
- in particular a surface layer (38, 44, 72), an adhesion promoter (46) and a core layer (40, 48, 74).

4. The method as claimed in any of claims 1 to 3,
- wherein a mold half (26, 28) is assembled in at least two parts from a main body (26a, 28a) and a mold insert (26b, 28b),
- wherein, in particular, the mold wall (22, 24) of the mold cavity (20) is assigned to the main body (26a, 28a) and an auxiliary wall (50) of the auxiliary cavity (30) is assigned to the mold insert (26b, 28b).

5. The method as claimed in any of claims 1 to 4,
- wherein the mold cavity (20, 58) is, as viewed in a cross section, circumferentially completely enclosed by the auxiliary cavity (30, 60).

6. The method as claimed in any of the preceding claims,
- wherein the first plastics component (38, 44, 72), during the injection into the mold cavity (20, 58), has a lower viscosity than the second plastics component (40, 46, 48, 74).

7. The method as claimed in any of the preceding claims,
- wherein the first plastics component (38, 72) is a polyamide (PA), a polyphenylene sulfide (PPS), a polyoxymethylene (POM) or a polyphthalamide (PPA), and
- wherein the second plastics component (40, 74) is a polyphthalamide (PPA), a polyamide (PA), a polyoxymethylene (POM), a polyphenylene sulfide (PPS), liquid-crystal polymer (LCP), polyketone (PK) or an ethylene vinyl alcohol copolymer (EVOH),
and/or
- wherein at least one plastics component is a fiber-reinforced plastic.

8. The method as claimed in claim 3,
- wherein the first plastics component (40, 72) is a high-density polyethylene (HDPE),
- wherein the second plastics component (46, 74) is an adhesion promoter, and
- wherein the third plastics component (48) is an ethylene vinyl alcohol copolymer (EVOH).

9. The method as claimed in claim 8,
- wherein the first plastics component (40, 72), during the injection into the mold cavity (20, 58), has a lower viscosity than the second plastics component (46, 74), and
- wherein the third plastics component (48), during the injection into the mold cavity (20, 58), has substantially the viscosity of the second plastics component (46, 74).

10. The method as claimed in any of the preceding claims,
- wherein, before or after the connection of the shells (4, 6), one or more functional units such as pump, fill level sensor, valve, connector plate, connection element or the like are fastened to the first shell (4) and/or to the second shell (6).

11. The method as claimed in any of the preceding claims,
- wherein the injection molding tool (18, 56, 76) has a throttle (62) which is provided for regulating a melt flow from the mold cavity (20, 58) to the auxiliary cavity (30, 60).

12. The method as claimed in claim 11,
- wherein the throttle (62) is formed by a constriction of a mold cross section.

13. The method as claimed in any of the preceding claims,
- wherein mold slides (70) are provided for opening up and closing off the auxiliary cavity (30, 60), having the method steps:
- partially or completely closing off the fluidic connection between the mold cavity (20, 58) and the auxiliary cavity (30, 60) by means of the mold slides (70), in particular before the injection of the first plastics component (38, 44, 72) and/or of the second plastics component (40, 46, 48, 74);
- partially or completely opening up the fluidic connection between the mold cavity and the auxiliary cavity, in particular after the injection of the first plastics component (38, 44, 72) and/or of the second plastics component (40, 46, 48, 74).

14. An injection molding tool for producing a liquid container for a motor vehicle, having
- at least one mold cavity (20, 58) which is provided for replicating the geometry of a first shell (4) and/or of a second shell (6) of the liquid container (2) and which is formed between mold walls (22, 24) of at least one first and one second mold half (26, 26a, 26b, 28, 28a, 28b, 54, 68) of the injection molding tool (18, 56, 76),
- wherein the injection molding tool (18, 56, 76) has at least one auxiliary cavity (30, 60),
- wherein the auxiliary cavity (30, 60) is fluidically connected to the mold cavity (20, 58),
- wherein the auxiliary cavity (30, 60) adjoins the mold cavity (20, 58) at least in certain portions in an edge region (34), spaced apart from a gate region (32, 59), of the mold cavity (20, 58), and
- wherein the auxiliary cavity (30, 60) is provided for receiving excess injection molding material (36), **characterized in that**
- the mold cavity (20, 58) is, as viewed in a cross section, circumferentially completely enclosed by the auxiliary cavity (30, 60).

15. The injection molding tool as claimed in claim 14,
- wherein the injection molding tool (18, 56, 76) has a throttle (62) which is provided for regulating a melt flow from the mold cavity (20, 58) to the auxiliary cavity (30, 60).

16. The injection molding tool as claimed in either of claims 14 and 15,
- wherein the throttle (62) is formed by a constriction of the mold cross section,
and/or
- wherein the throttle (62) is segmented for the purposes of locally regulating the melt flow,
and/or
- wherein the throttle (62), as viewed in a cross section, completely encloses the mold cavity.

17. The injection molding tool as claimed in any of claims 14 to 16,
- wherein one or more mold slides (70) are provided for opening up and closing off the auxiliary mold cavity (30, 60), and
- wherein the mold slides (70) are arranged in particular on a first and/or a second mold half (26, 26a, 26b, 28, 28a, 28b, 54, 68) of the injection molding tool (18, 56, 76).

## Revendications

1. Procédé de fabrication d'un réservoir de liquide (2) pour un véhicule automobile, qui est composé d'au moins deux coques (4, 6), les étapes de procédé suivantes étant effectuées :
- la fourniture d'une machine de moulage par injection (16),
- avec un outil de moulage par injection (18, 56, 76),
- l'outil de moulage par injection (18, 56, 76) ayant au moins une cavité de moule (20, 58) qui est prévue pour cartographier la géométrie d'une première coque (4) du réservoir de liquide (2) et qui est formée entre les parois de moule (22, 24, 64, 66) d'au moins un premier et un second demi-moule (26, 26a, 26b, 28, 28a, 28b, 54, 68) de l'outil de moulage par injection (18, 56, 76),
- l'outil de moulage par injection (18, 56, 76) ayant au moins une cavité secondaire (30, 60),
- la cavité secondaire (30, 60) étant en raccordement fluidique avec la cavité de moule (20, 58),
- la cavité secondaire (30, 60) étant contiguë à la cavité de moule (20, 58) au moins par sections dans une région de bord (34) de la cavité de moule (20, 58) espacée d'une région de carotte (32, 59),
- la cavité secondaire (30, 60) étant prévue pour recevoir un excès de matière de moulage par injection (36) et
- la cavité de moule (20, 58), vue en coupe transversale, étant complètement entourée du côté circonférentiel par la cavité secondaire (30, 60) ;
- la fabrication de la première coque (4) par plastification et injection d'un premier composant en plastique (38, 44, 72) et d'un deuxième composant en plastique (40, 46, 48, 74) dans la cavité de moule (20, 58),
- de sorte que le premier et le deuxième composant en plastique (38, 40, 44, 46, 48, 72, 74) sont reliés l'un à l'autre le long d'une interface (42) et que
- le premier composant en plastique (38, 44, 72) repose contre une paroi de moule (22, 66) du premier demi-moule (26, 54) et le deuxième composant en plastique (40, 46, 48, 74) et l'interface (42) sont espacés de la paroi de moule (22, 66) du premier demi-moule (26, 54),
- sachant qu'au moins une partie de la cavité secondaire (30, 60) est remplie d'un excès de matière de moulage par injection (36) des premier et deuxième composants en plastique (38, 40, 44, 46, 48, 72, 74) ;
- la production d'une seconde coque (6) du réservoir de liquide (2) ;
- l'assemblage des première et seconde coques (4, 6) ;
- l'élimination de l'excès de matière (36) des premier et deuxième composants en plastique (38, 40, 44, 46, 48, 72, 74), l'excès de matière (36) étant éliminé avant ou après le raccordement des coques (4, 6).

2. Procédé selon la revendication 1,
- dans lequel la machine de moulage par injection (16) prévue est configurée pour un moulage par injection en sandwich à plusieurs composants,
- dans lequel les premier et deuxième composants en plastique (38, 40, 44, 46, 48, 72, 74) sont introduits dans la cavité de moule (20, 58) et la cavité secondaire (30, 60) lors du moulage par injection en sandwich à plusieurs composants,
- dans lequel l'injection du premier composant en plastique (38, 44, 72) dans la cavité de moule (20, 58) commence temporairement avant l'injection du deuxième composant en plastique (40, 46, 48, 74) et
- le deuxième composant en plastique (40, 46, 48, 74) est injecté en tant que couche centrale dans le premier composant en plastique (38, 44, 72) de sorte que le premier composant en plastique (38, 44, 72) renferme la couche centrale (40, 46, 48, 74).

3. Procédé selon la revendication 2,
- dans lequel au moins trois composants en plastique (38, 40, 44, 46, 48, 72, 74) sont injectés l'un dans l'autre dans le moulage par injection en sandwich à plusieurs composants,
- en particulier une couche de recouvrement (38, 44, 72), un promoteur d'adhérence (46) et une couche centrale (40, 48, 74).

4. Procédé selon l'une des revendications 1 à 3,
- dans lequel un demi-moule (26, 28) est composé en deux pièces, d'un corps de base (26a, 28a) et d'un insert de moule (26b, 28b),
- dans lequel, en particulier, la paroi de moule (22, 24) de la cavité de moule (20) est associée au corps de base (26a, 28a) et une paroi secondaire (50) de la cavité secondaire (30) est associée à l'insert de moule (26b, 28b).

5. Procédé selon l'une des revendications 1 à 4,
- dans lequel la cavité de moule (20, 58), vue en coupe transversale, est complètement entourée du côté circonférentiel par la cavité secondaire (30, 60).

6. Procédé selon l'une des revendications précédentes,
- dans lequel le premier composant en plastique (38, 44, 72) présente une viscosité inférieure à celle du deuxième composant en plastique (40, 46, 48, 74) lorsqu'il est injecté dans la cavité de moule (20, 58).

7. Procédé selon l'une des revendications précédentes,
- dans lequel le premier composant en plastique (38, 72) est un polyamide (PA), un sulfure de polyphénylène (PPS), un polyoxyméthylène (POM) ou un polyphtalamide (PPA) et
- dans lequel le deuxième composant en plastique (40, 74) est un polyphtalamide (PPA), un polyamide (PA), un polyoxyméthylène (POM), un sulfure de polyphénylène (PPS), un polymère cristallin liquide (LCP), une polycétone (PK) ou un copolymère éthylène-alcool vinylique (EVOH) et/ou
- dans lequel au moins un composant en plastique est un plastique renforcé de fibres.

8. Procédé selon la revendication 3,
- dans lequel le premier composant en plastique (40, 72) est un polyéthylène haute densité (HDPE),
- dans lequel le deuxième composant en plastique (46, 74) est un promoteur d'adhérence et
- dans lequel le troisième composant en plastique (48) est un copolymère éthylène-alcool vinylique (EVOH).

9. Procédé selon la revendication 8,
- dans lequel le premier composant en plastique (40, 72) présente une viscosité inférieure à celle du deuxième composant en plastique (46, 74) lorsqu'il est injecté dans la cavité de moule (20, 58) et
- dans lequel le troisième composant en plastique (48) présente sensiblement la même viscosité que le deuxième composant en plastique (46, 74) lorsqu'il est injecté dans la cavité de moule (20, 58).

10. Procédé selon l'une des revendications précédentes,
- dans lequel, avant ou après le raccordement des coques (4, 6), une ou plusieurs unités fonctionnelles, telles qu'une pompe, un capteur de niveau, une vanne, une buse, un élément de connexion ou un élément similaire, sont fixées à la première coque (4) et/ou à la seconde coque (6).

11. Procédé selon l'une des revendications précédentes,
- dans lequel l'outil de moulage par injection (18, 56, 76) présente un étranglement (62) prévu pour réguler un écoulement de fusion de la cavité de moule (20, 58) vers la cavité secondaire (30, 60).

12. Procédé selon la revendication 11,
- dans lequel l'étranglement (62) est formé par un rétrécissement d'une section transversale de forme.

13. Procédé selon l'une des revendications précédentes,
- dans lequel des coulisseaux de moule (70) sont prévues pour libérer et fermer la cavité secondaire (30, 60), les étapes de procédé suivantes étant effectuées :
- la fermeture partielle ou totale du raccordement fluidique entre la cavité de moule (20, 58) et la cavité secondaire (30, 60) par les coulisseaux de moule (70), en particulier avant l'injection du premier composant en plastique (38, 44, 72) et/ou du deuxième composant en plastique (40, 46, 48, 74) ;
- la libération partielle ou totale du raccordement fluidique entre la cavité de moule et la cavité secondaire, notamment après l'injection du premier composant en plastique (38, 44, 72) et/ou du deuxième composant en plastique (40, 46, 48, 74).

14. Outil de moulage par injection pour la production d'un récipient de liquide pour véhicule automobile, comportant
- au moins une cavité de moule (20, 58) qui est prévue pour cartographier la géométrie d'une première coque (4) et/ou d'une seconde coque (6) du réservoir de liquide (2) et qui est formée entre les parois de moule (22, 24) d'au moins un premier et un second demi-moule (26, 26a, 26b, 28, 28a, 28b, 54, 68) de l'outil de moulage par injection (18, 56, 76),
- l'outil de moulage par injection (18, 56, 76) ayant au moins une cavité secondaire (30, 60),
- la cavité secondaire (30, 60) étant en raccordement fluidique avec la cavité de moule (20, 58),
- la cavité secondaire (30, 60) étant contiguë à la cavité de moule (20, 58) au moins par sections dans une région de bord (34) de la cavité de moule (20, 58) espacée d'une région de carotte (32, 59), et
- la cavité secondaire (30, 60) étant prévue pour recevoir un excès de matière de moulage par injection (36), **caractérisé en ce que**
- la cavité de moule (20, 58), vue en coupe transversale, est complètement entourée du côté circonférentiel par la cavité secondaire (30, 60).

15. Outil de moulage par injection selon la revendication 14,
- dans lequel l'outil de moulage par injection (18, 56, 76) présente un étranglement (62) prévu pour réguler un écoulement de fusion de la cavité de moule (20, 58) vers la cavité secondaire (30, 60).

16. Outil de moulage par injection selon l'une des revendications 14 ou 15,
- dans lequel l'étranglement (62) est formé par un rétrécissement d'une section transversale de forme et/ou
- dans lequel l'étranglement (62) est segmenté pour une régulation locale du flux de fusion et/ou
- dans lequel l'étranglement (62) entoure complètement la cavité du moule, vue en coupe transversale.

17. Outil de moulage par injection selon l'une des revendications 14 à 16,
- dans lequel un ou plusieurs coulisseaux de moule (70) sont prévus pour libérer et fermer la cavité secondaire (30, 60) et
- dans lequel les coulisseaux de moule (70) sont disposés notamment sur un premier et/ou un second demi-moule (26, 26a, 26b, 28, 28a, 28b 54, 68) de l'outil de moulage par injection (18, 56, 76).
